# FASCICULE DE BREVET EUROPEEN

(11) **EP 2 771 934 B1**
(45) Date de publication et mention de la délivrance du brevet: **18.01.2017**
(21) Numéro de dépôt: 12780181.9
(22) Date de dépôt: 26.10.2012
(51) Int. Cl.: H01M 8/12, H01M 8/04029, H01M 8/04014, C25B 15/00, C25B 9/18, H01M 8/04007, H01M 8/0267, H01M 8/2432, H01M 8/124

(54) **SYSTEME ELECTROCHIMIQUE TYPE ELECTROLYSEUR OU PILE A COMBUSTIBLE HAUTE TEMPERATURE A GESTION THERMIQUE AMELIOREE**
ELEKTROCHEMISCHES HOCHTEMPERATUR-BRENNSTOFFZELLE-SYSTEM MIT VERBESSERTER WÄRMEVERWALTUNG
HIGH-TEMPERATURE OR FUEL-CELL ELECTROCHEMICAL SYSTEM HAVING IMPROVED THERMAL MANAGEMENT

(30) Priorité: 28.10.2011 FR 1159843
(43) Date de publication de la demande: 03.09.2014
(73) Titulaire: Commissariat à l'Énergie Atomique et aux Énergies Alternatives, 75015 Paris (FR)
(72) Inventeur: LAURENCIN, Jérôme, F-38360 Sassenage (FR); DELETTE, Gérard, F-38000 Grenoble (FR); REYTIER, Magali, F-38250 Villard de lans France (FR)
(74) Mandataire: Ahner, Philippe
(86) Numéro de dépôt international: PCT/EP2012/071298
(87) Numéro de publication internationale: WO 2013/060869

(56) Documents cités:
- EP-A1- 2 284 936
- EP-A1- 2 355 204
- DE-A1-102004 013 256
- DE-A1-102007 033 428
- GB-A- 2 151 840
- US-A- 2 347 957
- US-A- 3 623 913
- US-A1- 2005 255 340
- US-A1- 2006 105 213
- ROUSSEAU B ET AL: "High emissivity of a rough Pr2NiO4 coating", APPLIED PHYSICS LETTERS, AIP, AMERICAN INSTITUTE OF PHYSICS, MELVILLE, NY, US, vol. 79, no. 22, 26 novembre 2001 (2001-11-26), pages 3633-3635, XP012029525, ISSN: 0003-6951, DOI: 10.1063/1.1420780

## Description

### DOMAINE TECHNIQUE ET ART ANTÉRIEUR

L'invention se rapporte aux électrolyseurs et aux piles à combustibles fonctionnant à haute température à gestion thermique améliorée.

Les électrolyseurs à hautes températures sont couramment dénommés SOEC (pour "Solid Oxide Electrolysis Cell" en terminologie anglo-saxonne). Ils assurent la conversion électrochimique d'une puissance électrique et thermique en énergie chimique. On désigne par co-électrolyse un fonctionnement dans lequel un mélange de vapeur d'eau et de dioxyde de carbone H₂O/CO₂ est introduit dans l'électrolyseur. La vapeur d'eau est transformée en hydrogène et le dioxyde de carbone est transformé en monoxyde de carbone afin de servir de vecteurs énergétiques. Selon la demande, ces gaz combustibles H_{2/}CO pourront être ultérieurement convertis en chaleur et en électricité par l'intermédiaire, par exemple, d'une pile SOFC (pour "Solide Oxide Fuel Cell" en terminologie anglo-saxonne).

Les électrolyseurs SOECs et piles à combustibles SOFCs correspondent à un fonctionnement inverse du même système électrochimique. On notera que ces systèmes présentent de forts rendements électriques. De plus, une grande flexibilité sur la nature du combustible est possible en mode SOFC. La pile peut être par exemple directement alimentée en gaz naturel. Dans ce cas, le reformage du méthane en hydrogène s'opère directement au coeur des cellules du système.

Les électrolyseurs SOECs et piles à combustibles SOFCs considérés sont formés par un empilement d'un grand nombre de cellules céramiques planes lieux des réactions électrochimiques, et de plaques d'interconnexion généralement métalliques interposées entre chaque paire de cellules céramiques. Une cellule comprend sur chacune de ses faces une couche céramique constituant une électrode (anode ou cathode), les deux électrodes d'une même cellule restant isolées et séparées par une membrane céramique ayant le rôle d'électrolyte.

Les plaques d'interconnexion assurent la distribution des gaz et le collectage du courant sur chacune des deux électrodes d'une cellule. Dans un empilement, les plaques d'interconnexion sont structurées sur chacune de leurs deux faces de façon à réaliser les fonctions de collectage et de distribution pour les électrodes opposées de deux cellules consécutives placées en vis-à-vis.

Un assemblage entre une cellule et les deux plaques d'interconnexion qui l'entourent forme un motif élémentaire défini. En particulier, sont présents au sein d'un motif élémentaire, les compartiments cathodique (lieu de réduction des espèces chimiques) et anodique (lieu des réactions d'oxydation) qui sont deux volumes étanches et isolés électriquement.

Les transferts de la chaleur sont en partie assurés par les gaz et par les échanges thermiques entre les bords de l'empilement et son enveloppe isolante. On comprend alors qu'un motif élémentaire le plus épais possible permet d'augmenter les surfaces d'échange et facilite la gestion thermique du système. Cependant, les plaques d'interconnexion sont généralement réalisées à partir de tôles embouties les plus fines possibles afin d'augmenter la compacité du convertisseur électrochimique et de limiter les coûts. Il apparait donc important de trouver un compromis entre cette contrainte de compacité, qui impose un volume faible, et les échanges thermiques qui requièrent des grandes surfaces.

Lors d'un fonctionnent stationnaire, la gestion thermique des piles SOFC s'effectue en partie en jouant sur le débit d'air envoyé à la cathode. Par ailleurs, le reformage interne facilite le contrôle thermique de l'empilement puisque l'endothermicité des réactions chimiques de transformation du méthane en hydrogène tend à équilibrer les dégagements de chaleur provoqués par l'oxydation électrochimique de l'hydrogène. Cependant, lors des transitoires de charges ou lors des phases de marche/arrêt du système, des gradients de température apparaissent et peuvent aboutir à un endommagement mécanique de l'empilement.

Concernant la gestion thermique des SOECs il a été montré que selon la tension de fonctionnement, la chaleur dégagée par les irréversibilités de fonctionnement peut être inférieure, égale ou supérieure à la chaleur absorbée par l'électrolyse de la vapeur d'eau. Pour des taux élevés de conversion de la vapeur d'eau, la température de l'électrolyseur peut varier très rapidement vers des niveaux inacceptables pour un fonctionnement durable du système. En effet, en cas de régime exothermique, l'hydrogène produit emmagasine peu de calories. Le flux d'hydrogène sortant de l'électrolyseur n'est donc pas capable d'évacuer une grande quantité de chaleur. De plus, signalons aussi qu'en cas de fonctionnement endothermique, il peut s'avérer difficile d'apporter de la chaleur à l'empilement pour un fonctionnement optimal.

Le document US2006105213 décrit par exemple une pile à combustible ayant des ailette ayant une certaine rugosité pour augmenter les échanges thermiques par conduction et convection.

### EXPOSÉ DE L'INVENTION

C'est par conséquent un but de la présente invention d'offrir un système électrochimique, tel qu'un électrolyseur ou une pile à combustible haute température à gestion thermique améliorée, et offrant une grande flexibilité vis-à-vis de la gestion thermique du système que ce soit en pilotage stationnaire ou lors des fonctionnements transitoires.

Le but précédemment énoncé est atteint par l'interposition dans un empilement de motifs élémentaires formés par des cellules céramiques et des interconnecteurs, de plaques offrant une surface de transfert thermique par rayonnement sensiblement plus grande que celle des interconnecteurs, assurant une surface de rayonnement entre l'empilement et par exemple une enveloppe thermalisée.

Cette surface radiative sensiblement plus grande est obtenue par une structuration de la surface latérale de la ou des plaques radiatives. Ces plaques sont réparties dans l'empilement, de préférence de manière périodique. Elles peuvent être placées soit en lieu et place de certains interconnecteurs, elles sont alors réalisées de sorte à assurer l'alimentation en gaz des cellules, soit de manière adjacente à des interconnecteurs.

On entend par "structuration", la réalisation d'un relief sur la surface des plaques de sorte à augmenter leur surface d'échange thermique, le relief est par exemple sous forme de nervures formant des ailettes. En outre, on entend par "transfert thermique" dans la présente demande, le transfert de chaleur de l'empilement vers l'extérieur, mais également, en mode de fonctionnement endothermique, l'apport de chaleur à l'empilement sous forme d'un transfert de l'extérieur vers l'empilement.

Grâce à l'invention, les échanges thermiques par flux rayonnés sont d'autant plus importants que la température est élevée, puisque les flux rayonnés sont proportionnels à T⁴. Ce mode de transfert thermique est donc faible à température ambiante et devient prépondérant à la température de fonctionnement d'un électrolyseur de type SOEC ou pile SOFC. Il est donc particulièrement adapté aux électrolyseurs de type SOEC et aux piles SOFC.

Dans un mode de réalisation particulièrement avantageux, les plaques radiatives comportent des rebords latéraux en saillie de l'empilement, les surfaces des rebords, perpendiculaires à l'axe de l'empilement peuvent alors être structurées, en plus de la surface latérale.

De préférence, ces plaques sont plus épaisses que les interconnecteurs, offrant alors une surface latérale d'échange radiatif encore plus grande.

L'empilement est alors divisé en sous-unités de cellules entourées et séparées par des plaques assurant efficacement le transfert par rayonnement. Ces plaques assurent la fonction de transfert par rayonnement. Dans les électrolyseurs et piles de l'état de la technique, un transfert par rayonnement a lieu au niveau des bords des interconnecteurs, or ceux-ci présentent une épaisseur très faible.

Ces plaques sont particulièrement efficaces dans la gestion thermique de l'empilement car le transfert thermique par rayonnement est le mode de transfert thermique prépondérant et le plus efficace dans les empilements de cellules des électrolyseurs et des piles.

En outre, elles permettent une gestion thermique particulièrement adaptée des systèmes pour lesquels une plus grande flexibilité est demandée, par exemple en termes de réversibilité, de fonctionnement en transitoire, de variabilité des gaz en entrée, ...

La présente invention a alors pour objet un système électrochimique selon la revendication 1 comportant un empilement d'axe longitudinal alternant des cellules céramiques et des interconnecteurs et comportant également des moyens de gestion thermique intégrés à l'empilement, caractérisé en ce que lesdits moyens de gestion thermique comportent au moins une plaque disposée dans l'empilement, dite "plaque radiative" munie d'au moins un bord latéral présentant une surface par laquelle a lieu un échange thermique par rayonnement avec l'extérieur de l'empilement, ladite surface étant au moins en partie structurée.

La plaque radiative présente avantageusement une épaisseur supérieure à celle des interconnecteurs et les interconnecteurs peuvent avoir une épaisseur comprise entre 0,1 mm et 15 mm et au moins une plaque radiative à une épaisseur comprise entre 5 mm et 50 mm.

Dans un exemple de réalisation particulièrement avantageux, la plaque radiative présente une section transversale supérieure à celle des cellules et celle des interconnecteurs de sorte à présenter un rebord périphérique en saillie de l'empilement, ledit rebord comportant un bord latéral dont la surface est au moins en partie structurée.

Le rebord présente deux faces longitudinales dont au moins une face longitudinale est au moins en partie structurée.

Avantageusement, la surface du bord latéral et/ou au moins une face longitudinale est recouverte d'un matériau présentant une émissivité proche de 1, par exemple en Pr₂NiO_{4+δ}.

Le système électrochimique peut comporter plusieurs plaques radiatives réparties dans l'empilement. De préférence, les plaques radiatives sont réparties périodiquement dans l'empilement, par exemple tous les 4 à 12 motifs élémentaires, un motif élémentaire étant formé par une cellule céramique et deux interconnecteurs. Selon une caractéristique avantageuse, la ou les plaques radiatives réparties périodiquement dans l'empilement remplacent des interconnecteurs situés aux extrémités des ensembles de motifs élémentaires qu'elles séparent.

Le système électrochimique peut comporter un circuit d'alimentation en gaz d'électrolyse des cellules céramiques.

La plaque radiative peut également comporter des moyens de transfert thermique par convection. Les moyens de transfert thermique par convection peuvent être formés par des canaux réalisés dans la plaque radiative et s'étendant sensiblement dans le plan de celle-ci, dans lesquels circule un fluide. Le fluide peut être soit un fluide différent de ceux intervenant dans les réactions d'électrolyse du système électrochimique, soit un gaz d'électrolyse intervenant dans au moins les réactions l'électrolyse du système électrochimique, le système comportant alors des moyens connectant lesdits canaux à un circuit d'alimentation en gaz d'électrolyse.

Le système électrochimique selon l'invention peut être une pile à combustible à fonctionnement en reformage sous gaz naturel, dans laquelle les canaux sont revêtus d'un catalyseur de vapo-reformage, le fluide étant un gaz naturel.

La plaque radiative peut également comporter des moyens de transfert thermique par conduction.

La plaque radiative peut également comporter un matériau à changement de phase dans les températures de fonctionnement souhaité du système. Le matériau à changement de phase étant par exemple disposé dans une cavité.

Le matériau à changement de phase peut être un matériau eutectique présentant une température de solidus est proche de 800°C et une température de liquidus est proche de 850°C.

Alternativement, le matériau à changement de phase est un sel fondu, par exemple NaCl.

Dans un exemple avantageux, au moins deux plaques radiatives comportent une connexion électrique de sorte à pouvoir isoler électriquement les cellules situées entre lesdites deux plaques radiatives.

Le système électrochimique selon l'invention peut être un électrolyseur haute température, par exemple destiné à produire de l'hydrogène.

Le système électrochimique selon l'invention peut être une pile à combustible, dans laquelle l'hydrogène consommé eut être généré par vapo-reformage de gaz naturel.

### BRÈVE DESCRIPTION DES DESSINS

La présente invention sera mieux comprise à l'aide de la description qui va suivre et des dessins en annexes sur lesquels :
- la figure 1A est une vue en perspective de dessus d'un premier exemple de réalisation d'une plaque de gestion thermique,
- la figure 1B est une vue de détail d'un bord latéral de la plaque radiative de la figure 1A,
- la figure 1C est une vue de face d'un exemple de réalisation d'un empilement intégrant des plaques de gestion thermique de la figure 1A,
- la figure 2A est une vue en perspective de côté d'une variante de réalisation du premier exemple de réalisation d'une plaque de gestion thermique,
- la figure 2B est une vue en coupe le long du plan A-A de la plaque radiative de la figure 2A,
- la figure 2C est une vue de face d'un exemple de réalisation d'un empilement intégrant des plaques de gestion thermique de la figure 2A,
- la figure 3A est une vue en perspective de dessus de deux plaques de gestion thermique selon un deuxième exemple de réalisation intégrant un transfert de type convectif,
- la figure 3B est une vue en coupe de la plaque supérieure de la figure 3A le long d'un plan B-B,
- la figure 4A est une vue en perspective de dessus de deux plaques de gestion thermique selon une variante du deuxième exemple de réalisation,
- la figure 4B est une vue en coupe de la plaque supérieure de la figure 4A le long d'un plan C-C, vue du bord latéral situé en arrière plan sur la figure 4A,
- la figure 5 est une vue en perspective de dessus d'une partie d'un empilement d'un électrolyseur haute température selon la présente invention comportant des plaques de gestion thermique selon une autre variante du deuxième exemple de réalisation,
- la figure 6A est une vue en perspective de dessus d'une plaque de gestion thermique selon une autre variante du deuxième exemple de réalisation,
- la figure 6B est une vue en coupe de la plaque de la figure 6A le long d'un plan D-D,
- la figure 7A est une vue en perspective de dessus d'une plaque de gestion thermique selon un troisième exemple de réalisation mettant en oeuvre des matériaux à changement de phase,
- la figure 7B est une vue en coupe de la plaque la figure 7A le long d'un plan E-E ;
- la figure 8A est une vue en perspective d'un empilement intégrant des plaques de gestion thermique selon une variante de réalisation,
- la figure 8B est une vue en coupe de l'empilement de la figure 8A le long d'un plan FF ;
- la figure 9A est une vue en perspective d'un empilement intégrant des plaques de gestion thermique selon une variante de réalisation,
- la figure 9B est une vue en coupe de l'empilement de la figure 9A le long d'un plan HH.

### EXPOSÉ DÉTAILLÉ DE MODES DE RÉALISATION PARTICULIERS

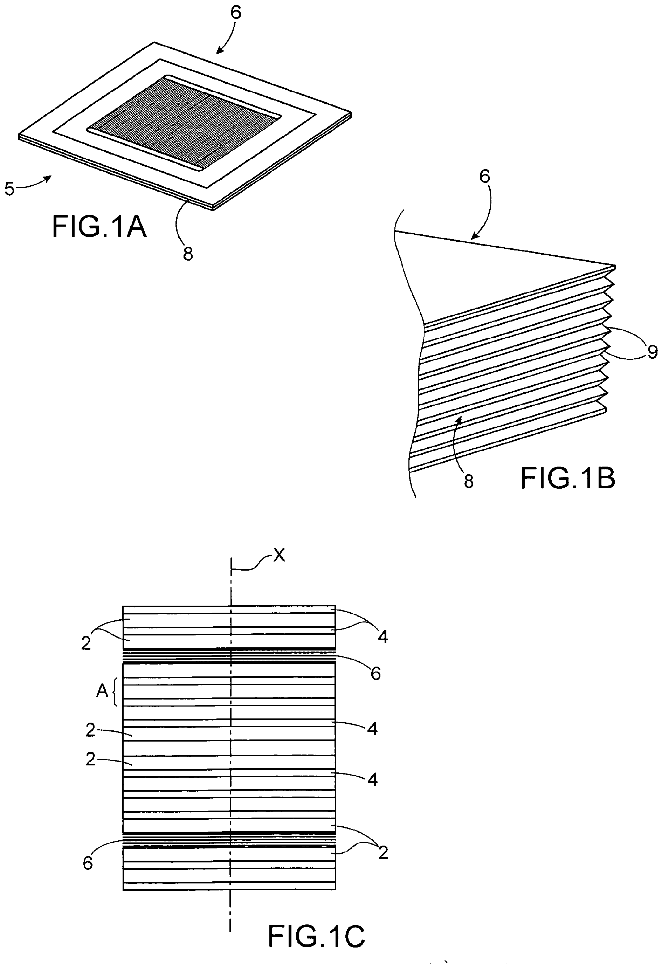

Sur la figure 1C, on peut voir un exemple de réalisation d'un empilement selon l'invention pour système électrochimique tel qu'un électrolyseur haute température ou une pile à combustible.

L'empilement s'étend le long d'un axe longitudinal X et comporte des cellules céramiques 2 séparées par des plaques d'interconnexion 4 ou interconnecteurs. Un assemblage A formé d'une cellule 2 et de deux interconnecteurs 4 qui l'entourent, forme un motif élémentaire. Par exemple, les cellules sont des structures en céramique de type multicouche comprenant un électrolyte (typiquement élaboré en zircone dopée à l'Yttrium ou en Yttrium-Stabilisée de Zirconium (YSZ : Yttria-stabilized Zirconia en terminologie anglo-saxonne) entouré des deux électrodes formées pour l'une d'un matériau de structure pérovskite (Manganite de Lanthane substitué avec du Strontium ou LSM) et, pour l'autre, d'un composite céramique-métal (mélange de YSZ et de Nickel ou Ni-YSZ). Les interconnecteurs sont typiquement en alliage Crofer^{®} 22 APU, qui est un acier ferritique, en Haynes 230^{®} ou en alliage à base de Nickel.

A titre d'exemple, les compositions du Crofer^{®} 22APU et du Haynes 230^{®} sont données dans le tableau ci-dessous.

| Alliage | Mo | Ni | Fe | Mn | Cr | Al | W | Ti | La |
|---|---|---|---|---|---|---|---|---|---|
| Crofer^{®}22APU | 0,00 2 | 0,32 | Bal. | 0,45 | 22,33 | 0,13 | <0,001 | 0,1 | 0,1 |
| Haynes | 1,32 | Bal. | 0,74 | 0,49 | 22,32 | 0,42 | 14,53 | 0,025 | ND |

L'empilement comporte également des plaques supplémentaires. Les plaques 6 sont réalisées en matériau conducteur électrique, de préférence en métal, par exemple en acier ferritique Crofer 22 APU^{®}, ou F18TNb, .... Ces plaques 6 assurent la gestion thermique du système électrochimique par transfert thermique par rayonnement de la chaleur produite lors du fonctionnement du système électrochimique. Les plaques 6 seront désignées par la suite « plaques radiatives ».

Les plaques 6 sont réparties dans l'empilement, de préférence de manière périodique. Par exemple, deux plaques radiatives sont séparées par 4 à 12 motifs élémentaires. Le nombre de motifs élémentaires séparant deux plaques radiatives 6 est choisi de sorte à limiter le gradient de température dans le sens d'empilement, i.e. selon le sens du courant.

L'empilement selon l'invention comporte des motifs élémentaires composés de cellules céramiques et d'interconnecteurs et des plaques radiatives, comme nous le verrons par la suite, des plaques radiatives peuvent avoir également la fonction d'interconnecteurs, cependant elles ne remplacent que certains d'entre eux.

Un exemple de plaque 6 est représenté sur la figure 1A et une vue de détail de celui-ci est représentée sur la figure 1B.

Dans l'exemple représenté, la plaque radiative 6 a une forme carrée, et présente alors quatre bords latéraux 8, formant une surface d'échange ou de transfert thermique.

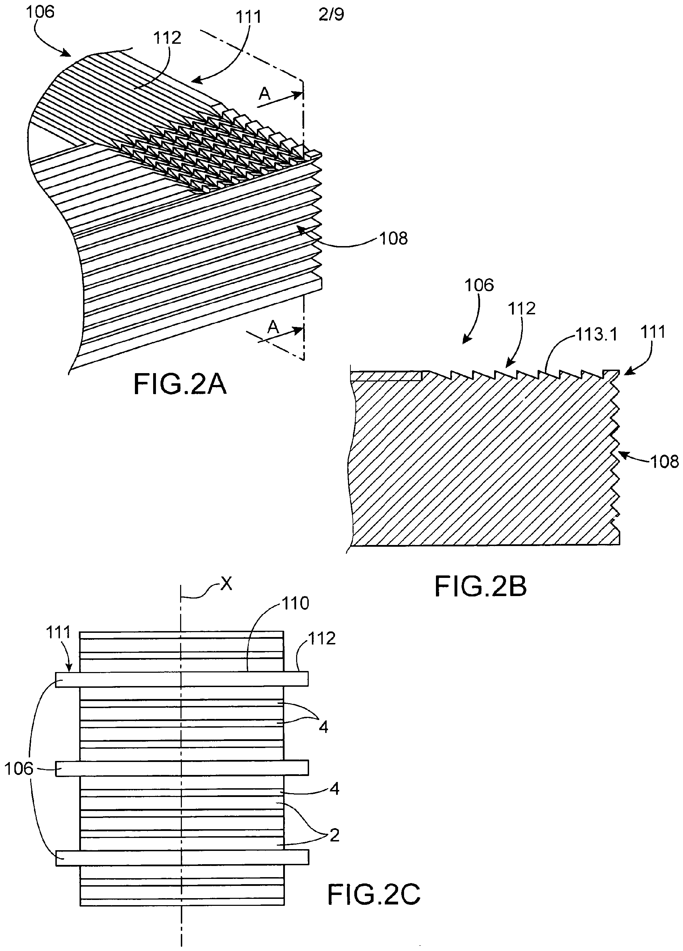

Les plaques 6 présentent une surface de transfert thermique par rayonnement supérieure à celles des interconnecteurs. Les plaques 6 comportent des bords latéraux 8 structurés au moins en partie de sorte à augmenter la surface de rayonnement. Sur la figure 2A, on peut voir un exemple d'une plaque 6 munie d'une telle structuration. Sur la figure 1B, on peut voir une vue agrandie d'un bord latéral 8 de la plaque de la figure 1A. Dans cet exemple, le bord 8 comporte des nervures 9 parallèles aux faces longitudinales de la plaque radiative, les nervures ayant une section en V. L'orientation des nervures n'est pas limitative. En particulier, le cas de nervures s'étendant perpendiculairement aux faces longitudinales de la plaque ou en biais ne sort pas du cadre de la présente invention. En outre, le motif de la structuration peut être quelconque et être différent d'un bord à l'autre.

Les bords latéraux des plaques peuvent être dans les mêmes plans verticaux que ceux de l'empilement, le sommet des nervures se situe alors dans ces plans verticaux. En variante, la structuration des bords latéraux est en saillie, le sommet des nervures est alors en saillie des plans verticaux des bords de l'empilement.

De préférence, les plaques radiatives présentent une épaisseur, i.e. une dimension selon l'axe longitudinal X, supérieure ou égale à celle des interconnecteurs. Elles présentent alors avant structuration de leur surface latérale, une surface d'échange thermique plus grande que celle des interconnecteurs.

Nous allons maintenant donner des valeurs d'épaisseur avantageuses des plaques d'interconnecteur et des plaques radiatives

Dans le cas d'une plaque d'interconnecteur "mince" par exemple réalisée à partir d'une tôle emboutie, celle-ci peut avoir une épaisseur comprise entre 0,1 mm et 1 mm, la plaque radiative a avantageusement une épaisseur comprise entre 10 mm et 50 mm et de préférence égale à 40 mm.

Dans le cas d'une plaque d'interconnecteur "épaisse", celle peut avoir une épaisseur comprise entre 5 mm et 10 mm, la plaque radiative a avantageusement une épaisseur comprise entre 5 mm et 20 mm et de préférence égale à 10 mm.

La plaque 6 de la figure 1A présente une surface sensiblement égale à celle des interconnecteurs 4 et des cellules 2, i.e. ses bords sont alors sensiblement alignés avec ceux des interconnecteurs et des cellules.

Dans l'exemple représenté, la plaque radiative 6 remplace l'interconnecteur situé à extrémité d'un empilement continu de motifs élémentaires; l'une des faces longitudinale 10 de la plaque radiative est alors munie de canaux d'alimentation des cellules en gaz combustible et en gaz comburant. Cette configuration permet de simplifier l'empilement, de réduire la résistance électrique et les problèmes d'étanchéité.

Alternativement, la plaque 6 pourrait être disposée entre une cellule 2 et un interconnecteur, des perçages seraient alors prévus pour réaliser les connexions fluidiques à travers l'empilement.

Sur les figures 2A et 2B, on peut voir une variante de réalisation particulièrement avantageuse d'une plaque radiative 106 selon la présente invention, dans laquelle la plaque 206 comporte une structuration sur ses bords latéraux 8 et sur la périphérie extérieure de ses faces longitudinales 10.

La plaque 106 présente une section transversale supérieure à celle des cellules et des interconnecteurs, de sorte qu'elle comporte un rebord périphérique extérieur 111 en saillie de la surface latérale moyenne de l'empilement. Sur la figure 2C, on peut voir un empilement comportant des plaques 106; les rebords en saillie 111 des plaques radiatives 106 forment des ailettes d'échange thermiques.

Les faces longitudinales du rebord 111 comportent une structuration de ses bords latéraux 108 de manière similaire à la plaque 6, et avantageusement une structuration 113 du bord extérieur 112 de ses faces longitudinales. Comme on peut le voir sur la figure 2B, cette structuration 113 est, vue en coupe, un profil en dent de scie. Avantageusement, la plus grande face 113.1 des dents est orientée vers l'extérieur de l'empilement, les plus grandes surfaces étant alors orientées vers l'extérieur et la chaleur rayonnant principalement vers l'extérieur.

Alternativement, on peut prévoir que seules les faces longitudinales comportent une structuration, les bords latéraux étant lisses ou, inversement, que seuls les bords latéraux sont structurés et les faces longitudinales sont lisses. On peut également envisager une structuration partielle des bords latéraux et/ou des faces longitudinales.

Par ailleurs, la forme carrée des plaques et plus généralement des éléments de l'empilement n'est pas limitative, et une forme de disque par exemple ne sort pas du cadre de la présente invention.

Nous allons donner, à titre d'exemple, un dimensionnement des plaques.

Dans le cas de figure d'une tension imposée de 1,5 Volts/cellule avec des cellules de 77,44 cm² de surface active, des plaques radiatives placées toutes les cinq cellules, des interconnecteurs ayant une épaisseur de 1 mm, une température d'introduction des gaz et une thermalisation de l'enveloppe environnant l'empilement à 800°C, les plaques radiatives 6 structurées ont une épaisseur égale à 44 mm. Dans le cas d'interconnecteurs ayant une épaisseur de 10 mm, les plaques radiatives structurées ont une épaisseur de 11 mm.

L'épaisseur des plaques radiatives dépend du niveau de structuration de leurs bords latéraux et éventuellement des faces longitudinales.

De manière avantageuse, on peut revêtir les bords latéraux et/ou les bords extérieurs des faces longitudinales des plaques radiatives avec un matériau présentant une émissivité proche de 1. Par exemple, le revêtement peut être en Pr₂NiO_{4+δ} obtenu par pyrosol.

En outre, il est envisageable d'augmenter les pertes radiatives et ainsi refroidir l'empilement en contrôlant la température de l'environnement extérieur à l'empilement, par exemple celle d'une enveloppe entourant l'empilement. Dans ces conditions, un asservissement dynamique de la température de l'électrolyseur ou de la pile peut être réalisé. De même, en mode endothermique, l'apport de chaleur sous forme radiative sera favorisé en contrôlant la température de l'enveloppe externe.

Dans les exemples représentant les plans moyens des bords latéraux sont sensiblement parallèles à l'axe longitudinal X de l'empilement, cependant ces plans pourraient être inclinés par rapport à l'axe longitudinal X.

En variante, on peut prévoir que le rebord latéral extérieur présente une épaisseur supérieure à celle de la partie centrale de la plaque radiative, augmentant ainsi également les pertes radiatives ; ce rebord épaissi peut également être structuré.

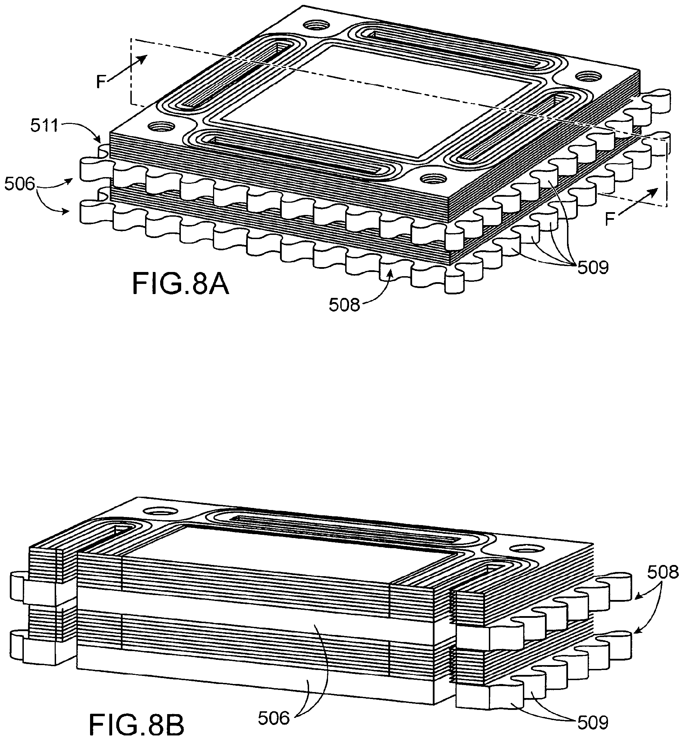

Sur les figures 8A et 8B, on peut voir une variante de réalisation des plaques radiatives 506. Dans cette variante, les plaques radiatives comportent un rebord périphérique 511 en saillie dont le bord latéral 508 est muni d'ondulations 509. Dans l'exemple représenté, ces ondulations 509 ont un axe parallèle à celui de l'empilement. La surface de rayonnement est ainsi augmentée.

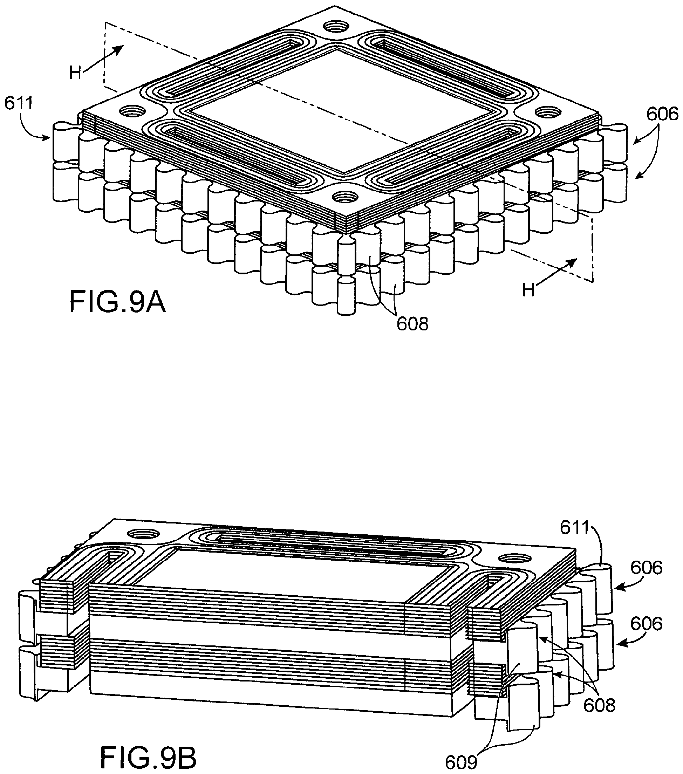

Sur la figures 9A et 9B, on peut voir une autre variante de réalisation des plaques radiatives 606 qui diffèrent de celles des figures 8A et 8B, en que leur rebord périphérique 611 présente une épaisseur supérieure à celle de la section transversale de la partie de la plaque radiative située au sein de l'empilement. Comme on peut le voir sur la figure 9B, le rebord périphérique 611 des plaques radiatives à un profil sensiblement en T. En outre le bord latéral 608 est muni d'ondulations 609. La surface de rayonnement est encore augmentée. D'autres profils assurant une augmentation de la surface de rayonnement sont envisageables, par exemple un profil en L.

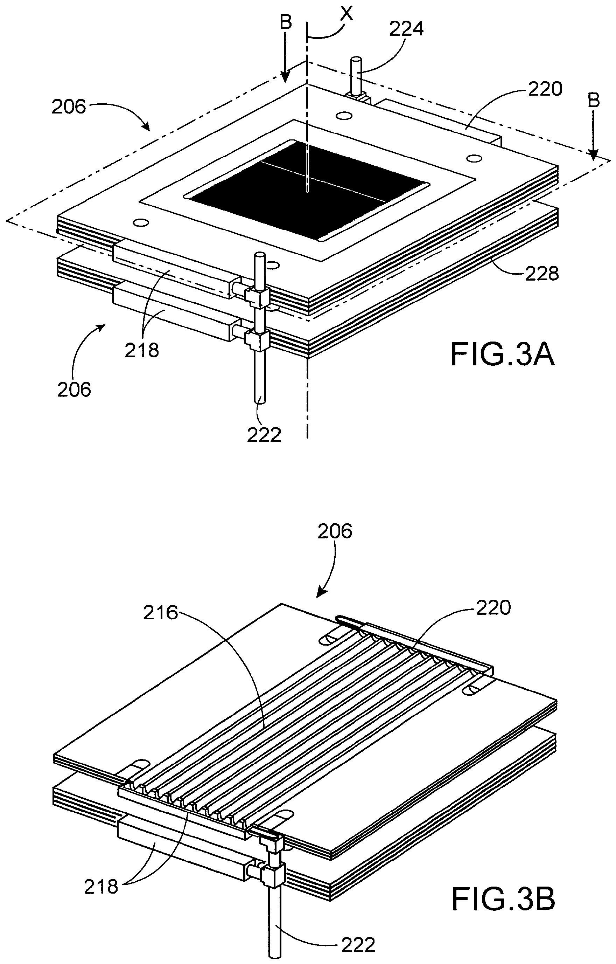

Sur les figures 3A et 3B, on peut voir un deuxième exemple de réalisation de plaque radiative selon la présente invention, qui en plus du refroidissement par transfert radiatif intègre un refroidissement par convection. Inversement, en mode endothermique, ces échanges par convection permettront d'apporter de la chaleur à l'empilement.

Les plaques 206 représentées sur les figures 3A et 3B sont destinées à former également des interconnecteurs. Sur la figure 3A, les cellules et les interconnecteurs ont été omis.

Sur la figure 3B, on peut voir une vue en coupe selon le plan de coupe C-C de la plaque 206. La plaque radiative 206 comporte, comme les plaques 6 et 106, une structuration d'au moins une partie de ses bords latéraux 208 afin d'assurer un refroidissement par transfert radiatif, et des moyens de circulation 214 d'un fluide caloporteur en son sein, assurant une évacuation des calories par convection. Dans l'exemple représenté, les moyens de circulation sont formés par des canaux 216 s'étendant entre deux bords parallèles 208 de la plaque 206, parallèlement les uns aux autres. Les canaux 216 sont reliés au niveau d'une première extrémité à un connecteur d'alimentation 218 et au niveau d'une deuxième extrémité à un connecteur d'évacuation 220. Dans cet exemple de réalisation, les canaux 216 sont alimentés en parallèle, et toutes les plaques 206 sont alimentées en parallèle par un tuyau 222 connecté aux connecteurs d'alimentation 218 de toutes les plaques 206 et sont évacuées en parallèle par un tuyau 224 connecté aux connecteurs d'évacuation 220 de toutes les plaques 206. L'agencement des canaux de circulation du caloporteur peut être quelconque.

Dans cet exemple, le fluide caloporteur est un gaz différent de celui utilisé dans l'électrolyse lors du fonctionnement de la pile ou de l'électrolyseur. Ce gaz est par exemple un gaz neutre en recirculation dans les plaques radiatives 206 assurant la récupération de chaleur produite en excès.
Une isolation électrique est prévue entre les plaques radiatives 206. Par exemple, on réalise une isolation électrique à la jonction des tubes 222 et des connecteurs d'alimentation 218, par exemple en utilisant des joints mica.

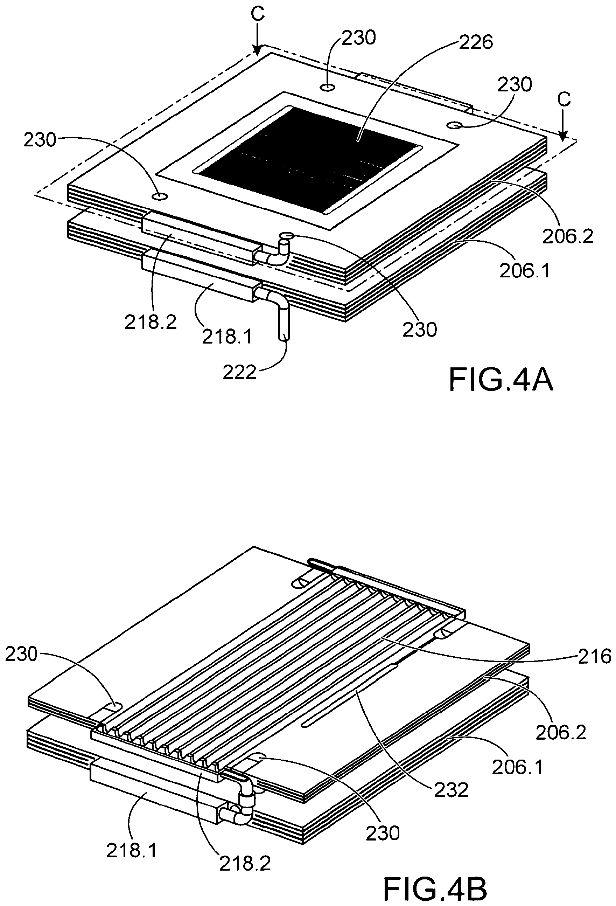

Sur les figures 4A et 4B, on peut voir une variante du système des figures 3A et 3B, dans laquelle les canaux de circulation 216 de caloporteur sont connectés en série. Un tuyau d'alimentation 222 en caloporteur alimente le connecteur d'alimentation 218.1 de la première plaque 206.1 de l'empilement, le connecteur d'évacuation (non visible) de la première plaque 206.1 est connecté au connecteur d'alimentation 218.2 de la plaque suivante 206.2 et ainsi de suite, de sorte que le caloporteur circule dans toutes les plaques.

Dans les exemples représentés, les plaques 206 sont destinées à remplacer des interconnecteurs, elles sont donc également munies de canaux d'alimentation 226 en gaz comburant et en gaz combustible situés sur leur partie centrale. Les canaux 226 sont eux-mêmes alimentés via des piquages 230 situés sur les bords des plaques et des canaux formés à l'intérieur des plaques 206.

Dans un système avec une tension imposée de 1,5 Volts/cellule, des cellules de 77,44 cm² de surface active, des plaques radiatives 206 placées toutes les cinq cellules, une température d'empilement n'excédant pas 840°C, de la vapeur introduite à 800°C avec un débit de 2 l/min, des interconnecteurs de 1 mm d'épaisseur, il a été déterminé que l'épaisseur des plaques radiatives 206 était d'environ 42 mm. La répartition de la chaleur dissipée dans l'empilement est alors la suivante : environ 70,5% de la chaleur est évacuée par les pertes radiatives, 27% de la chaleur est évacuée par les fluides cathodiques et anodiques, et 2,5 % par le fluide caloporteur. Le refroidissement par convection permet donc d'améliorer la gestion thermique de l'empilement en appoint du refroidissement par transfert radiatif. La quantité de chaleur évacuée par convection pourra être augmentée par exemple soit en augmentant le débit du fluide soit en choisissant un fluide caloporteur plus efficace.

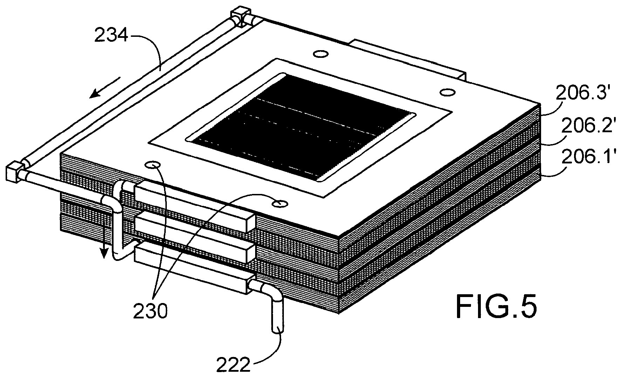

Sur la figure 5, on peut voir une variante de réalisation des plaques des figures 3A à 4B, dans laquelle les moyens de refroidissement par convection utilisent un gaz d'électrolyse anodique ou cathodique.

Sur la figure 5, est représenté un empilement des plaques radiatives 206.1', 206.2', 206.3' et des cellules 2. Les plaques radiatives 206.1', 206.2', 206.3' sont similaires aux plaques radiatives 206 des figures 3A à 4B, le tuyau 222 alimente les plaques radiatives 206.1', 206.2', 206.3' en gaz d'électrolyse, dans l'exemple représenté en série. En sortie de la plaque 206.3', le gaz d'électrolyse collecté est injecté dans les cellules 2 par le tuyau 234 à travers un piquage latéral de la première plaque 206.1. Les flèches symbolisent l'écoulement du gaz. Le gaz d'électrolyse est par exemple de l'eau vapeur. La connexion fluidique connectant deux plaques radiatives présente une isolation électrique, par exemple réalisée grâce à un joint en mica.

Grâce à cet agencement, on assure le refroidissement par convection de l'empilement, tout en préchauffant les gaz d'électrolyse en utilisant directement la chaleur générée au plus proche des cellules.

Selon une autre variante, il est envisageable de faire circuler en plus un gaz autour de l'empilement qui est situé dans son enveloppe pour favoriser les échanges convectifs.

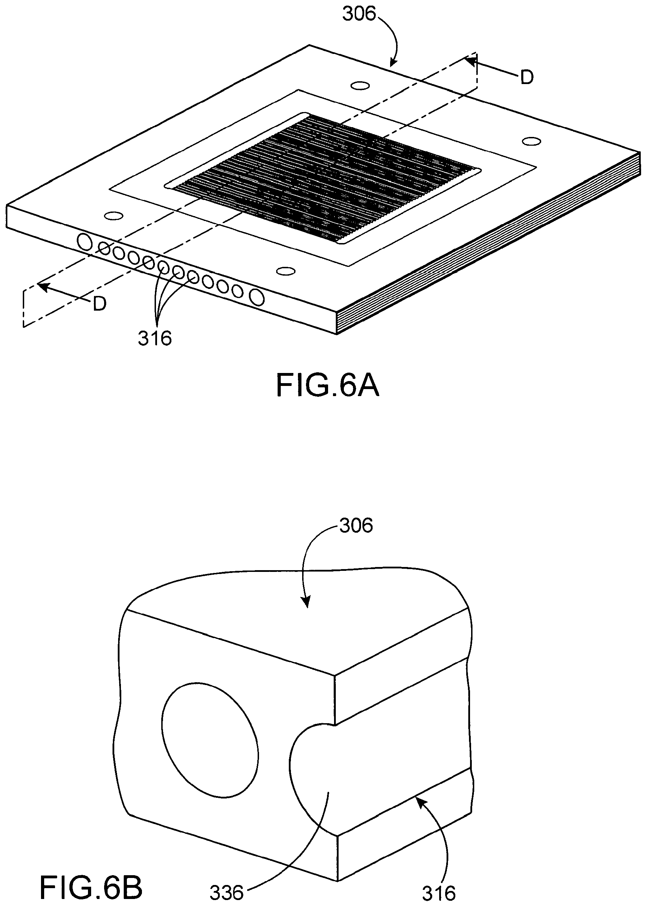

Dans une autre variante représentée sur les figures 6A et 6B, dans le cas d'une pile SOFC fonctionnant en reformage sous méthane, les canaux 316 des plaques radiatives 306 sont recouverts d'un catalyseur 336 de vapo-reformage, par exemple de type cérine dopée Ru, Rh.... On effectue ainsi un pré-reformage du gaz naturel avant son introduction dans les cellules de la pile. Cette réaction étant endothermique, elle assure un refroidissement par convection des l'empilement.

En cours de fonctionnement, le système électrochimique peut être amené à subir des cycles en tension et de température. Ces transitions peuvent générer des gradients de températures préjudiciables à l'intégrité mécanique des cellules. Par ailleurs, une température très élevée même momentanée, supérieure à 850°C peut être dommageable pour les matériaux métalliques de l'empilement.

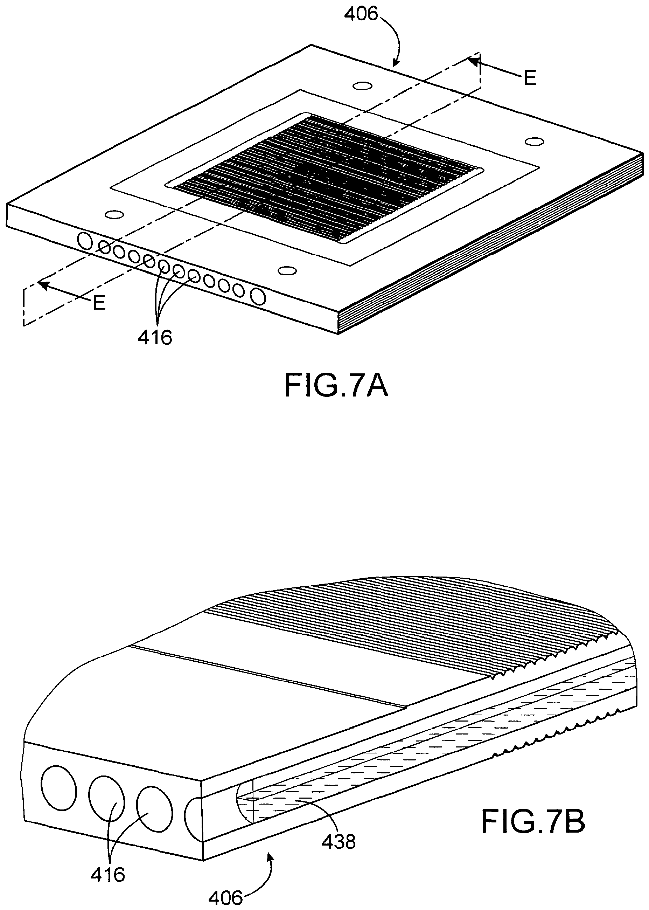

L'exemple de réalisation de plaque radiative représenté sur les figures 7A et 7B permet avantageusement de limiter les changements brusques de températures au sein de l'empilement ainsi que les températures supérieures à 850°C.

Comme dans le deuxième exemple de réalisation, la plaque radiative 406 comporte des canaux 416 s'étendant entre deux bords parallèles de la plaque 406, parallèlement les uns aux autres. Cependant ces canaux contiennent un matériau à changement de phase 438 qui change de phase entre 800°C et 850°C, dans la gamme de température de fonctionnement d'un électrolyseur et d'une pile à combustible haute température. La chaleur latente requise pour la transformation du matériau à changement de phase 438 est fournie par la chaleur produite par l'électrolyseur, celle-ci est donc absorbée par le matériau à changement de phase 438, ce qui limite l'élévation de température au-delà d'un seuil dangereux pour l'empilement.

Le matériau à changement de phase 438 peut être un eutectique de manière à fondre à température constante ce qui permet de maintenir l'empilement à température constante pendant ce changement de phase. Par exemple il peut s'agir d'un alliage avec une température de solidus proche de 800°C et une température de liquidus proche de 850°C. Ce matériau eutectique pourra être par exemple un alliage Ag(96.9%)-Si avec une température de fusion de 835°C. alternativement, il peut s'agir de Cu-Si (85%) avec une température de fusion de 802°C, ou de LiF avec une température de fusion de 848°C et pour des applications à plus basse température du Ag-Cu (28%) avec une température de fusion de 780°C. D'autres alliages peuvent être envisagés tels que le Ag58-Cu32-Pd10 (853°C-824°C), Au60-Cu20-Ag20 (845°C-835°C), ou à plus basse température Ag95-Al5 (830°C-780°C) ou Ag68-Cu27-Pd5 (814°C-794°C). Entre parenthèses sont indiquées les températures de solidus et de liquidus respectivement de chacun des alliages.

Le matériau à changement de phase 438 peut également être un sel fondu qui présente un coût réduit. Dans le cas de l'utilisation de sels fondus, il est prévu de protéger les plaques radiatives de la corrosion par du nitrure de bore par exemple. Par exemple, comme sel fondu on peut utiliser le NaCl avec une température de fusion de 800°C ou bien le **Na₂Co₃** avec une température de fusion de 850°C. En utilisant le NaCl comme matériau à changement de phase dans une plaque radiative selon l'invention tous les cinq modules, une température de 800°C peut être garantie pendant 30 min à 1,5 V en remplissant 10 canaux de diamètre 10 mm sur 200 mm de long. Pour le calcul, il a été considéré une puissance à évacuer de 100W, la chaleur latente du NaCl de 472kJ/kg et sa densité de 2160 kg/m³.

Grâce à l'utilisation de matériau à changement de phase, il est possible d'introduire un seuil haut et un seuil bas pour la température de l'empilement afin de limiter les fortes variations de températures momentanées appelées transitoires.

Dans la recherche d'optimisation de la production d'hydrogène en fonction du coût de l'électricité, on peut envisager avec ce système de fonctionner à fort potentiel (1,5 V) lorsque le prix du courant est bas et d'utiliser la chaleur dégagée pour fondre cet alliage. Puis, lorsque le prix du courant est haut, l'électrolyseur fonctionne à une tension inférieure à 1,3 V, en mode endothermique. La chaleur emmagasinée par le matériau à changement de phase est alors restituée à l'empilement lors de sa solidification et constitue une source de chaleur disponible pour augmenter le rendement de l'électrolyse.

Dans les exemples représentés sur les figures 3A à 7B, les canaux sont rectilignes et parallèle entre eux, mais cette configuration n'est en aucun cas limitative, des canaux courbés ou ayant toute autre forme, répartis dans plusieurs couches et/ou répartis de manière non uniforme dans la plaque, ne sort pas du cadre de la présente invention.

Les plaques radiatives munies de canaux peuvent être réalisées par métallurgie des poudres à l'aide d'un procédé de Compaction Isostatique à Chaud (CIC).

Dans ce cas, l'ensemble formant les canaux de distribution est obtenu par des tubes métalliques cintrés et entourés par le matériau constitutif de la plaque introduit initialement sous forme de poudre. L'ensemble est comprimé à haute température afin d'obtenir une pièce dense dont les faces extérieures peuvent être reprises par usinage pour obtenir les cotes finales. En variante, on peut prévoir de former les canaux en réalisant une première série de perçages parallèles et ensuite de réaliser une deuxième série de deux perçages perpendiculaires aux perçages de la première série, de manière à faire communiquer entre eux les perçages de la première série. Les zones débouchantes sont ensuite refermées en soudant des bouchons, par exemple en forme de cylindre aux dimensions du perçage. Cette variante offre l'avantage de présenter un coût de revient plus faible que le procédé CIC.

Selon un autre exemple de réalisation non représenté, on prévoit d'associer au refroidissement par transfert radiatif, le refroidissement par conduction. Par exemple, l'empilement est logé dans une enveloppe conductrice thermique, les plaques radiatives présentent une section transversale supérieure à celle des cellules et des interconnecteurs, de telle sorte qu'elles soient en contact avec l'enveloppe ; elles sont alors connectées thermiquement à l'enveloppe. Une partie de la chaleur produite dans l'empilement est évacuée par conduction à travers les plaques radiatives et l'enveloppe, dont la température peut être contrôlée. Dans cet exemple de réalisation, une isolation électrique est prévue entre les plaques radiatives et l'enveloppe pour éviter un court-circuit entre les plaques radiatives.

Une combinaison des variantes de réalisation décrites ci-dessus ne sort pas du cadre de la présente invention. Par exemple, une plaque radiative comportant des canaux dans lesquels circule un gaz neutre assurant un refroidissement additionnel par convection, des canaux dans lesquels un gaz d'électrolyse s'échauffe, assurant lui aussi un refroidissement additionnel par convection et des canaux contenant un matériau à changement de phase ne sort pas cadre de la présente invention. Toute autre combinaison est envisageable.

Les plaques radiatives, en plus de permettre une gestion thermique simplifiée de l'empilement, peuvent permettre d'isoler une section du reste de l'empilement en cas de défaillance d'une cellule faisant partie de cette section. Pour cela, les plaques radiatives peuvent être équipées d'une connexion électrique individuelle Il devient alors possible à tout moment d'établir un pontage en reliant les deux plaques situées à chaque extrémité de la section. Cette opération simple permet d'isoler électriquement cette zone de l'empilement dans laquelle une des cellules est endommagée. L'empilement pourra ainsi continuer de fonctionner tout en évitant que du courant soit imposé au niveau de la cellule endommagée.

Enfin, les plaques radiatives même en l'absence de matériau à changement de phase provoquent une certaine inertie thermique dans l'empilement, limitant ainsi l'apparition de fort gradient de température en transitoire.

L'invention permet d'éviter dans le cas des électrolyseurs à haute température un fort échauffement de l'électrolyseur permettant de travailler avec des taux de conversion de la vapeur d'eau importants.

Grâce à l'invention, le comportement thermique des électrolyseurs et des piles à combustibles haute température peut être géré efficacement et de manière relativement simple. En outre, les moyens mis en oeuvre, i.e. les plaques radiatives offrent une grande sûreté de fonctionnement et une grande polyvalence dans les modes de refroidissement pouvant être mis en oeuvre. De même, ces plaques peuvent servir à l'apport de chaleur nécessaire au mode de fonctionnement endothermique.

## Revendications

1. Système électrochimique comportant un empilement d'axe longitudinal (X) alternant des cellules (2) et des interconnecteurs (4) et comportant également des moyens de gestion thermique intégrés à l'empilement, lesdits moyens de gestion thermique comportant des plaques (6, 106, 206, 306) disposées dans l'empilement, dites "plaques radiatives" munies d'au moins un bord latéral présentant une surface par laquelle a lieu un échange thermique par rayonnement avec l'extérieur de l'empilement, **caractérisé en ce que** les cellules (2) sont des cellules céramiques et **en ce que** ladite surface est au moins en partie structurée, lesdites plaques radiatives remplaçant au plus certains des interconnecteurs, les autres interconnecteurs étant distincts des plaques radiatives.

2. Système électrochimique selon la revendication 1, dans lequel la plaque radiative (6, 106, 206, 306) présente une épaisseur supérieure à celle des interconnecteurs et dans lequel les interconnecteurs (4) ont une épaisseur comprise entre 0,1 mm et 15 mm et au moins une plaque radiative (6, 106, 206, 306) a une épaisseur comprise entre 5 mm et 50 mm.

3. Système électrochimique selon la revendication 1 ou 2, dans lequel la plaque radiative (106) présente une section transversale supérieure à celle des cellules (2) et à celle des interconnecteurs (4) de sorte à présenter un rebord périphérique (11) en saillie de l'empilement.

4. Système électrochimique selon la revendication 3, dans lequel le rebord périphérique (11) comporte un bord latéral dont la surface est au moins en partie structurée et deux faces longitudinales (10) dont au moins une face longitudinale est au moins en partie structurée.

5. Système électrochimique selon la revendication 4, dans lequel la surface du bord latéral et/ou au moins une face longitudinale est/sont recouverte/s d'un matériau présentant une émissivité proche de 1, par exemple en Pr₂NiO_{4+δ}.

6. Système électrochimique selon l'une des revendications 1 à 5, dans lequel les plaques radiatives (6, 106, 206, 306) sont réparties périodiquement dans l'empilement, par exemple tous les 4 à 12 motifs élémentaires, un motif élémentaire étant formé par une cellule céramique (2) et deux interconnecteurs (4).

7. Système électrochimique selon l'une des revendications 1 à 6, dans lequel le bord latéral comporte des ondulations.

8. Système électrochimique selon l'une des revendications 1 à 7 en combinaison avec la revendication 3, dans lequel le rebord périphérique présente une épaisseur supérieure à celle d'une partie de la plaque radiative disposée à l'intérieur de l'empilement.

9. Système électrochimique selon l'une des revendications 1 à 8, dans lequel la plaque radiative (206) comporte des moyens de transfert thermique par convection formés par des canaux (216) réalisés dans ladite plaque radiative (206) et s'étendant sensiblement dans le plan de celle-ci, un fluide circulant dans lesdits canaux.

10. Système électrochimique selon la revendication 9, dans lequel le fluide est un fluide différent de ceux intervenant dans les réactions d'électrolyse du système électrochimique.

11. Système électrochimique selon la revendication 9, dans lequel le fluide est un gaz d'électrolyse intervenant dans au moins les réactions l'électrolyse du système électrochimique, le système comportant des moyens connectant lesdits canaux (216) à un circuit d'alimentation en gaz d'électrolyse.

12. Système électrochimique selon l'une des revendications 1 à 11, dans lequel la plaque radiative (406) comporte au moins une cavité (416) contenant un matériau à changement de phase (438) dans les températures de fonctionnement souhaité du système.

13. Système électrochimique selon la revendication 12, dans lequel le matériau à changement (438) de phase est un matériau eutectique présentant une température de solidus est proche de 800°C et une température de liquidus est proche de 850°C.

14. Système électrochimique selon la revendication 12, dans lequel le matériau à changement de phase est un sel fondu, par exemple NaCl.

15. Système électrochimique selon l'une des revendications 1 à 14, dans lequel au moins deux plaques radiatives comportent une connexion électrique de sorte à pouvoir isoler électriquement les cellules situées entre lesdites deux plaques radiatives.

## Patentansprüche

1. Elektrochemisches System, umfassend einen alternierenden Stapel von Zellen (2) und Zwischenverbindern (4) mit longttudinaler Achse (X), und ferner umfassend Wärmekontrollmittel, die in den Stapel integriert sind, wobei die Wärmekontrollmittel Platten (6, 106, 206, 306) umfassen, die in dem Stapel angeordnet sind, genannt "Strahlungsplatten", die mit wenigstens einem lateralen Rand ausgestattet sind, der eine Oberfläche aufweist, durch welche ein Wärmeaustausch durch Strahlung mit der Außenseite des Stapels erfolgt, **dadurch gekennzeichnet, dass** die Zellen (2) Keramikzellen sind und dass Oberfläche wenigstens teilweise strukturiert ist, wobei die Strahlungsplatten höchstens einige der Zwischenverbinder ersetzen, wobei die anderen Zwischenverbinder von den Strahlungsplatten getrennt sind.

2. Elektrochemisches System nach Anspruch 1, wobei die Strahlungsplatte (6, 106, 206, 306) eine Dicke aufweist, die größer ist als jene der Zwischenverbinder, und wobei die Zwischenverbinder (4) eine Dicke haben, die zwischen 0,1 mm und 15 mm enthalten ist, und wobei wenigstens eine Strahlungsplatte (6, 106, 206, 306) eine Dicke aufweist, die zwischen 5 mm und 50 mm enthalten ist.

3. Elektrochemisches System nach Anspruch 1 oder 2, wobei die Strahlungsplatte (106) einen transversalen Querschnitt aufweist, der größer ist als jener der Zellen (2) und als jener der Zwischenverbinder (4), derart, dass sie einen Umfangsrand (11) aufweist, der von dem Stapel vorsteht.

4. Elektrochemisches System nach Anspruch 3, wobei der Umfangsrand (11) einen lateralen Rand umfasst, dessen Oberfläche wenigstens teilweise strukturiert ist, sowie zwei longitudinale Flächen (10), von denen wenigstens eine longitudinale Fläche wenigstens teilweise strukturiert ist.

5. Elektrochemisches System nach Anspruch 4, wobei die Oberfläche des lateralen Rands und/oder wenigstens eine longitudinale Fläche mit einem Material bedeckt ist/sind, das ein Emissionsvermögen nahe 1 aufweist, beispielsweise *Pr₂NiO*_{4+δ}.

6. Elektrochemisches System nach einem der Ansprüche 1 bis 5, wobei die Strahlungsplatten (6, 106, 206, 306) periodisch in dem Stapel verteilt sind, beispielsweise alle 4 bis 12 elementaren Motive, wobei ein elementares Motiv durch eine Keramikzelle (2) und zwei Zwischenverbinder (4) gebildet ist.

7. Elektrochemisches System nach einem der Ansprüche 1 bis 6, wobei der laterale Rand Wellungen umfasst.

8. Elektrochemisches System nach einem der Ansprüche 1 bis 7 in Kombination mit Anspruch 3, wobei der Umfangsrand eine Dicke aufweist, die größer ist als jene eines Teils der Strahlungsplatte, der innerhalb des Stapels angeordnet ist.

9. Elektrochemisches System nach einem der Ansprüche 1 bis 8, wobei die Strahlungsplatte (206) Mittel zur Wärmeübertragung durch Konvektion umfasst, die durch Kanäle (216) gebildet sind, welche in der Strahlungsplatte (206) realisiert sind und sich im Wesentlichen in ihrer Ebene erstrecken, wobei ein Fluid in den Kanälen zirkuliert.

10. Elektrochemisches System nach Anspruch 9, wobei das Fluid ein anderes Fluid ist als jenes, das in den Elektrolysereaktionen des elektrochemischen Systems eingesetzt wirt.

11. Elektrochemisches System nach Anspruch 9, wobei das Fluid ein Elektrolysegas ist, das wenigstens in den Elektrolysereaktionen des elektrochemischen Systems eingesetzt wird, wobei das System Mittel umfasst, die die Kanäle (216) mit einem Elektrolysegas-Versorgungskreis verbinden.

12. Elektrochemisches System nach einem der Ansprüche 1 bis 11, wobei die Strahlungsplatte (406) wenigstens einen Hohlraum (416) umfasst, der ein Material zur Phasenänderung (438) bei den gewünschten Arbeitstemperaturen des Systems enthält.

13. Elektrochemisches System nach Anspruch 12, wobei das Phasenänderungsmaterial (438) ein eutektisches Material ist, das eine Solidus-Temperatur nahe 800°C und eine Liquidus-Temperatur nahe 850°C aufweist.

14. Elektrochemisches System nach Anspruch 12, wobei das Phasenänderungsmaterial ein geschmolzenes Salz ist, beispielsweise NaCl.

15. Elektrochemisches System nach einem der Ansprüche 1 bis 14, wobei wenigstens zwei Strahlungsplatten eine elektrische Verbindung derart umfassen, dass die Zellen, die zwischen den zwei Strahlungsplatten angeordnet sind, elektrisch isoliert werden können.

## Claims

1. A electrochemical system including a stack of longitudinal axis (X) with alternating units (2) and interconnectors (4), and also including thermal management means included in the stack, said thermal management means include plates (6, 106, 206, 306) positioned in the stack, called the "radiative plates", having at least one lateral edge with a surface through which a heat exchange takes place by radiation with the exterior of the stack, **characterised in that** the units are ceramic units and **in that** said surface is at least partly structured, said radiative plates replacing at most some of the interconnectors, and the other interconnectors being separate from the radiative plates.

2. An electrochemical system according to claim 1, in which the radiative plate (6, 106, 206, 306) is thicker than the interconnectors, and in which the interconnectors (4) are between 0.1 mm and 15 mm thick, and at least one radiative plate (6, 106, 206, 306) is between 5 mm and 50 mm thick.

3. An electrochemical system according to claim 1 or 2, in which the radiative plate (106) has a transverse section greater than that of the cells (2), and that of the interconnectors (4), such that it has a peripheral ridge (11) protruding from the stack.

4. An electrochemical system according to claim 3, in which the peripheral ridge (11) includes a lateral edge the surface of which is at least partly structured, and two longitudinal faces (10), at least one longitudinal face of which is at least partly structured.

5. An electrochemical system according to claim 4, in which the surface of the lateral edge and/or at least one longitudinal face is/are covered with a material having emissivity close to 1, for example Pr₂NiO_{4+δ}.

6. An electrochemical system according to one of claims 1 to 5, in which the radiative plates (6, 106, 206, 306) are distributed periodically in the stack, for example in every 4 to 12 elementary units, an elementary unit being formed by a ceramic cell (2) and two interconnectors (4).

7. An electrochemical system according to one of claims 1 to 6, in which the lateral edge has undulations.

8. An electrochemical system according to one of claims 1 to 7 in combination with claim 3, in which the peripheral ridge is thicker than a portion of the radiative plate positioned inside the stack.

9. An electrochemical system according to one of claims 1 to 8, in which the radiative plate (206) includes means of thermal transfer by convection formed by channels (216) made in said radiative plate (206) and extending roughly in its plane, a fluid flowing in said channels.

10. An electrochemical system according to claim 9, in which the fluid is a fluid different from those used in the electrolysis reactions of the electrochemical system.

11. An electrochemical system according to claim 9, in which the fluid is an electrolysis gas used in at least the electrolysis reactions of the electrochemical system, the system including means connecting said channels (216) to an electrolysis gas supply circuit.

12. An electrochemical system according to one of claims 1 to 11, in which the radiative plate (406) includes at least one cavity (416) containing a material (438) which changes phase at the desired operating temperatures of the system.

13. An electrochemical system according to claim 12, in which the phase-change material (438) is a eutectic material having a solidus temperature close to 800°C and a liquidus temperature close to 850°C.

14. An electrochemical system according to claim 12, in which the phase-change material is a molten salt, for example NaCl.

15. An electrochemical system according to one of claims 1 to 14, in which at least two radiative plates include an electrical connection so as to be able to isolate electrically the cells located between said two radiative plates.
